# EUROPEAN PATENT APPLICATION

(11) **EP 1 850 585 A2**
(43) Date of publication of application: **31.10.2007**
(21) Application number: 07002613.3
(22) Date of filing: 07.02.2007
(51) Int. Cl.: H04N 5/445

(54) **Device and method for receiving digital multimedia broadcasting data**

(30) Priority: 28.04.2006 KR 20060038653
(71) Applicant: Samsung Electronics Co., Ltd., Suwon-si, Gyeonggi-Do (KR)
(72) Inventor: Jeon, Moon Sang, Buk-gu Daegu Metropolitan City (KR)
(74) Representative: Lang, Johannes

(57) **Abstract**

A device and method for receiving digital multimedia broadcasting include a method for receiving a digital broadcasting signals, creating a playlist containing plural program items scheduled to be broadcasted through at least one broadcast channel, each program item having delimiters and program information; monitoring an advent of one of the delimiters; and performing, if a delimiter is detected, an operation corresponding to the delimiter. The device and method for receiving the digital multimedia broadcasting according to the present invention allow the user to create and edit a playlist, which contains at least one program items obtained from EPG data and information on the program items, and automates channel switching and playbacks of the program item, resulting in improved user convenience.

## Description

### BACKGROUND OF THE INVENTION

### 1. Field of the Invention

The present invention relates to digital multimedia broadcasting (DMB) and, in particular, to a device and method for receiving digital multimedia broadcast.

### 2. Description of the Related Art

Digital broadcasting is the practice of using digital data rather than analog waveforms to carry broadcasts over television channels or assigned radio frequency bands. It is becoming increasingly popular in a transmission medium such as television but is being adapted at a slower rate in a medium such as radio.

As the strong synergies between mobile technologies and broadcast technologies become increasingly clear, the telecom broadcasting industries are aligning to take full advantage of the wealth of opportunities opened up by this new marriage.

As mobile telephones are in widespread use and the strong synergies between mobile technologies and broadcast technologies become increasingly clear, multimedia contents delivery services have been available widely and on-demand.

Digital multimedia broadcasting (DMB) is a digital transmission system for delivery of multimedia contents and services on the move. DMB is based on the Digital Audio Broadcasting (DAB) standard, which is modified for transmitting digital audio, video, and multimedia streaming for mobile DMB receivers. DMB enables people on the road to enjoy crystal-clear video, CD quality of audio, and data via DMB exclusive terminals or hand-held devices such as mobile telephones. DMB services can be provided with plural video and audio channels and be received by the DMB receivers having non-directional antennas.

There are two types of DMB: Terrestrial DMB (T-DMB) and Satellite DMB (S-DMB). Both T-DMB and S-DMB are roughly equal in terms of their mobile reception of multimedia broadcasts. The difference between them is that T-DMB works on networks built only through terrestrial broadcast stations, while S-DMB utilizes networks built with satellites and gap Fillers, which provide in-building coverage.

Table 1 shows comparison between conventional broadcasting system and DMB system.

**TABLE 1**

| | Mobility | | Comparison |
|---|---|---|---|
| | Non-support | Support | |
| Transmission | Terrestrial broadcasting | T-DMB | Broadcast station |
| | Satellite broadcasting | S-DMB | Satellite |
| Receiver | Large | small | |

Typically, the DMB terminal is smaller than the conventional TV receiver. T-DMB works on networks built only through terrestrial broadcast stations, while S-DMB utilizes networks built with satellites and gap Fillers for securing in-building coverage.

S-DMB incorporates a high power geostationary satellite for outdoor coverage integrated with a terrestrial repeater (low power gap-filler) network for indoor coverage in urban areas.

In the meantime, T-DMB utilizes the terrestrial broadcast stations such as base stations of a cellular communication system.

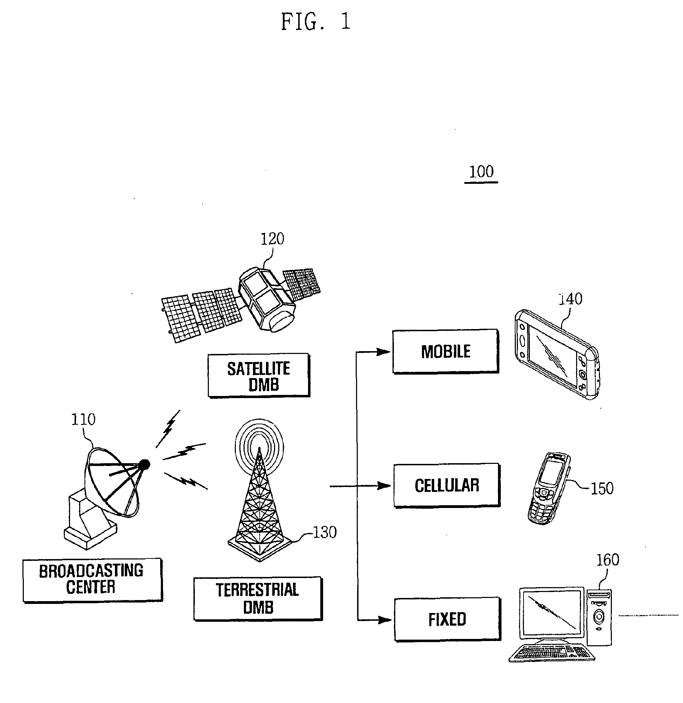

FIG. 1 is a schematic block diagram illustrating a typical S-DMB system.

Referring to FIG. 1, the S-DMB system (100) includes a broadcasting center 110, a satellite 120, a terrestrial repeater 130, and DMB receivers 140, 150, and 160 such as an in-car terminal, a mobile handset, and a personal computer equipped with DMB receiver module.

The satellite 120 is connected to the broadcasting center 110 so as to receive multimedia-broadcasting data. Upon receiving the multimedia data, the broadcasting center 110 compresses multimedia data in a predetermined format and transmits the compressed data to the satellite 120 and the terrestrial repeater 130. Upon receiving the compressed data, the satellite 120 and the terrestrial repeater 130 amplify and then multicast or broadcast the multimedia data such that the DMB receivers 140, 150, and 160 receive the multimedia data. Each DMB receiver receives the multimedia data from the satellite 120 and/or the terrestrial repeater 130. Once the multimedia data are received, the DMB receiver performs decompression, demodulation, and decoding on the received multimedia data so as to recover the original multimedia data.

Even though the conventional DMB system takes advantages of high quality video and audio and supports mobility, these are only basically expected characteristics of the DMB service. Accordingly, additional services and DMB functionalities are needed for enhancing the usability of the system, thereby improving the user's convenience and enjoyment with the DMB service.

Further, the conventional DMB system has a drawback that the user should manually input a channel number for changing a channel or retrieving a desired broadcast program, resulting in inconvenience.

### SUMMARY OF THE INVENTION

The present invention solves the above problems, and it is an object of the present invention to provide a device and method for receiving digital multimedia broadcasting (DMB) programs that allows creating and editing a playlist of program items provided by different contents providers.

It is another object of the present invention to provide a device and method for receiving DMB programs that is capable of automatically switching channels according to channel information provided with program items of a playlist, the program items being selected from program schedules of different contents providers.

It is another object of the present invention to provide a device and method for receiving DMB programs that is capable of automatically starting and stopping programs according to start and end times of the programs provided in a playlist, which is created by selecting program items supplied by different contents providers.

It is yet another object of the present invention to provide a device and method for receiving DMB programs capable of automatically switching channels and turning on/off playbacks of the programs according to a playlist edited to contain program items provided by different content providers.

In accordance with one aspect of the present invention, the above and other objects are accomplished by a method for receiving digital multimedia broadcasting. The method includes creating a playlist containing plural program items scheduled to be broadcasted through at least one broadcast channel, each program item having delimiters and program information; monitoring an advent of one of the delimiters; and performing, if a delimiter is detected, an operation corresponding to the delimiter.

In accordance with another aspect of the present invention, the above and other objects are accomplished by a method for receiving digital broadcasting. The method for receiving digital broadcasting includes creating a playlist containing plural program items scheduled to be broadcasted through at least one broadcast channel, each program item having start and end times and program information; determining whether there is an advent of a start time of a program item; start playback of the program item on the start time; determining whether there is an advent of an end time of the program item; determining whether there is an advent of a start time of a next program item; determining whether the end time of the current program item is identical with the start time of the next program item; switching to the channel through which the next program item is broadcasted on the start time of the next program if the end time of the current program item is identical with the start time of the next program item; and performing a preset operation before the start time of the next program item if the end time of the current program item is not identical with the start time of the next program item.

In accordance with another aspect of the present invention, the above and other objects are accomplished by a method for receiving digital multimedia broadcasting. The method includes creating a playlist containing plural program items scheduled to be broadcasted through at least one broadcast channel, each program item having start and end times and program information; playing a first program item arrange in the playlist after automatically turning the broadcasting receiver to a channel of the first program item on a start time of the program item; checking the start time of a second program item arranged right after the first program item; determining whether an end time of the first program item is identical with the start time of the second program item; and switching, automatically, to a channel of the second program item if the end time of the first program item is identical with the start time of the second program item.

In accordance with another aspect of the present invention, the above and other objects are accomplished by a method for receiving digital multimedia broadcasting. The method includes determining whether an input for editing a start time of the playlist; presenting program items currently scheduled; obtaining an end time of the first program item if a program item is selected as a first program item,; editing the end time of the first program item according to the input if an input for editing the end time is detected,; and setting the edited time as the end time of the first program item.

In accordance with another aspect of the present invention, a portable device for receiving digital multimedia broadcasting signal accomplishes the above and other objects. The portable device includes a memory for storing DMB application which processes DMB signals, data generated while the application is processing the DMB signals, and configuration parameters related to the DMB application; a controller for creating a playlist containing a plurality of program items to be broadcasted through different channels in accordance with user's input and program information on each program item, and for controlling the DMB receiver to receive the program items and processing playbacks of the program items on the basis of the playlist; a display unit for presenting the playlist and programs corresponding to the program items under the control of the controller; and a multimedia module for automatically switching channels on the basis of the program information.

In accordance with still another aspect of the present invention, the above and other objects are accomplished by a digital multimedia-broadcasting receiver. The digital multimedia broadcasting receiver includes an electronic program guide (EPG) parser for extracting EPG data from broadcasted signals; a storage for storing the EPG data extracted by the EPG parser, a playlist created on the basis of the EPG data; a user configuration unit for extracting program items and basic information on the program items, and arranging the program items with the basic information in the playlist;an alarm generator for generating alarms on the basis of the basic information; and a configuration extractor for retrieving program item and performing automatic channel switching and automatic power on/off function on the basis of the basic information.

### BRIEF DESCRIPTION OF THE DRAWINGS

The above and other objects, features and advantages of the present invention will be more apparent from the following detailed description in conjunction with the accompanying drawings, in which:
FIG. 1 is a schematic block diagram illustrating a typical S-DMB system;
FIG. 2 is a block diagram illustrating a portable terminal according to the present invention;
FIG. 3 is a block diagram illustrating a multimedia processing module of FIG. 2 in more detail;
FIG. 4 is a flowchart illustrating a method for receiving multimedia broadcasting programs according to the present invention;
FIGs. 5A and 5B are flowcharts illustrating a procedure for playback of program items registered in a playlist according to the present invention; and
FIGs. 6A and 6B are flowcharts illustrating a procedure for playback of a program items registered in a playlist according to the present invention.

### DETAILED DESCRIPTION OF THE INVENTION

Exemplary embodiments of the present invention are described with reference to the accompanying drawings in detail. The same reference numbers are used throughout the drawings to refer to the same or like parts. Detailed descriptions of well-know functions and structures incorporated herein are omitted to avoid obscuring the subject matter of the present invention.

In the following detailed description, only a preferred embodiment has been shown and described, simply by way of illustration of the best mode contemplated by the inventors of carrying out the invention. As will be realized by an artisan of ordinary skill in the art, the invention may be modified in various adaptations, all without departing from the spirit of the invention. Accordingly, the drawings and description are to be regarded as illustrative in nature and not restrictive.

In the present invention, a playlist can be created and edited by user's intention such that the playlist consists of plural program items provided by different DMB service providers.

The playlist can be edited to contain a plurality of program items arranged chronologically such that the corresponding programs are received and played back in a sequential order.

The playlist can consist of program items provided by different contents providers. In case of the playlist consisted of program items provided by different contents providers, the channels are automatically switched with reference to start times of the program items.

That is, a DMB playlist to be scheduled is created and edited by the subscriber and a portable terminal combined with the DMB receiver provides the programs to the subscriber in the scheduled order.

Typically, a DMB system program information is supplied in an electronic form known as an Electronic Program Guide (EPG). An EPG includes program information contained in a file or data stream with a known format, which can be parsed and visually presented to the subscriber.

That is, the program information includes channel identifiers, start and end times of each program, and the like.

The EPG can be transmitted with other public broadcasting information such as weather forecast and traffic report. Weather forecast and traffic report information can be included in "multimedia data" in claim 17.From the EPG information, the DMB receiver extracts the information on the broadcast programs and stores the extracted programs into memory. The program information is provided to the subscriber when it is requested. The information on the broadcast programs is provided in a form of a broadcast program list of a channel as in Table 2.

**Table 2**

| Broadcast channel | |
|---|---|
| Broadcasting Time | Program |
| 06:00~08:00 | Star Wars Episode I |
| 08:00~10:00 | Memento |
| 10:00~12:00 | I AM SAM |
| 12:00~14:00 | Fire Starter |
| 14:00~16:00 | Lord of the Rings 2 |
| 16:00~18:00 | 36 Steps |
| 18:00~20:00 | The 39 Steps |
| 20:00~22:00 | North by Northwest |
| 22:00~24:00 | The Bird |

As shown in Table 2, the playlist of a channel provides information on the titles of the programs with their scheduled broadcasting times.

In the DMB system for a digital broadcasting service, detailed information on each program is provided together with the playlist of the scheduled program, such that the subscriber can obtain the detailed information on the program broadcasted already or to be broadcasted in future through the DMB terminal.

Typically, the DMB terminal is provided with various functions such as a reserve-recording, automatic on/off control, and the like for the user's convenience.

The present invention is explained using a portable terminal combined with a DMB receiver for illustration, however, it is not limited to this configuration, but can be implemented with the communication devices such as cellular phones, Personal Communication Service (PCS) phones, dedicated DMB receivers, smart phones, International Mobile Telecommunication 2000 (IMT-2000) terminals, Universal Mobile Telecommunication Service (UMTS) terminals, laptop computers, personal computers, and the like.

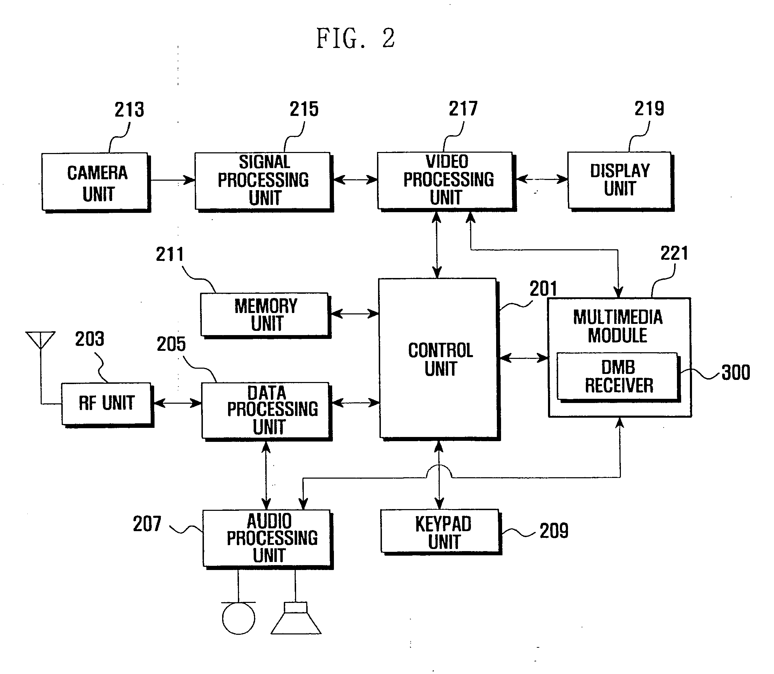

FIG. 2 is a block diagram illustrating a portable terminal according to the present invention.

Referring to FIG. 2, the portable terminal includes an input part, a processing part, a storage part, and a communication part. The multimedia processing module 221 includes a DMB receiver.

The input part includes an audio processing unit 207 for processing sound signals inputted through a microphone a keypad unit 209 for generating key input signals, a camera unit 213 for taking a picture. A display unit 219 can be included in the input part if the display unit 219 is implemented with a liquid crystal display (LCD) having an overlaid touch screen.

The processing part includes a signal processing unit 215 for converting analog signals of the picture taken by the camera unit 213 into digital video signals, a video processing unit 217 for processing the digital video signals output from the signal processing unit and DMB video signals output from a multimedia module 221, a data processing unit 205 for processing audio signals output from the audio processing unit 207 and key input signals generated through the keypad unit 209, a control unit 201 for controlling overall operation of the portable terminal, and the multimedia module 221 for extracting video, audio, and text signals from received DMB signals. Preferably, the multimedia module 221 further includes a connection interface for connecting the DMB receiver to an external device such as a portable phone and a TV.

In the case where the multimedia module 221 is combined with a portable phone, the multimedia module further includes an audio/video processing unit for processing the decoded broadcasting data so as to output as audio and video data and an output unit for outputting the broadcasting program, i.e., the video and audio programs, through a display and a speaker.

The processing part processes the signals preprocessed by the processing units.

The storage part includes a memory unit 211 for storing the user data input, DMB data output from the multimedia module 221, and application programs for supporting audio/video broadcasting services.

The output part includes a display unit 219 for presenting the user data input through the input part and requested by a user and an audio processing unit 207 for processing to output the audio signal. The output part is responsible for outputting the audio and video signals.

The communication part includes a radio frequency (RF) unit 203 for exchanging the data with other communication devices and web servers.

The RF processing unit 203 includes a RF transmitter for up-converting and amplifying signals to be transmitted and a low-noise RF receiver for amplifying and down-converting the received signals.

The data processing unit 205 performs decoding and demodulation on the signal to be transmitted through the RF processing unit 203 and demodulation and decoding on the signals received from the RF processing unit 203.

The audio processing unit 207 processes the audio signals from the data processing unit 205 and the multimedia module 221 so as to be replayed through the speaker and transfers the audio signals input through the microphone to the data processing unit 205.

The keypad unit 209 includes alphanumeric and character keys for user data input and function keys for operating various functions supported by the portable terminal.

The memory unit 211 includes a program memory and a data memory. The program memory stores the operating programs for controlling general operations of the portable terminal and an application program for supporting the DMB service. The data memory stores the data generated during the operations of the programs, parameter settings for operating the DMB service, and menu settings in a form of database. The database maps the applications and associated settings and parameters.

The DMB application includes an information provider program module for providing audio and video information, channel information, and broadcasting data; a mode switching program module for switching to a playlist configuration mode; an information extraction program module for extracting information on channels and start and end times of the program items of the playlist from EPG information in the playlist configuration mode; a storage control program module for storing the playlist; an alert generation module for checking the start and end time of each program item of the playlist and alerting arrival of the start and end times; an on/off control module for turning on and off the power in accordance with playlist settings; a channel shifting program module for automatically changing channels according to information of the program items when the programs are provided through different channels; and a playback control program module for controlling the playback of each broadcasting program.

The control unit 201 controls overall operation of the portable terminal. Particularly, the control unit 201 controls switching between operation modes in accordance with key inputs through the keypad unit 209. For example, if a key input for entering the DMB service mode is detected while the portable terminal is in the voice communication mode, the control unit 201 switches from the voice communication mode to the DMB service mode. In addition, the control unit 201 presents information on the additional functions and user data associated with the DMB service according to additional key manipulation.

The additional functions include automatic channel switching and on/off functions in accordance with the program and channel information of the program items scheduled in the playlist.

The camera unit 213 takes a picture and converts analog video signals representing the picture into digital video signals by cooperating with an encoder (not shown). The digital video signals are processed by the signal processing unit 215 so as to be outputted as image signals.

The video processing unit 217 generates presentation data from the image signals output from the signal processing unit 215. The video processing unit 217 processes the video and data signals (DMB signals) supplied through the multimedia module 221 in compliance with the specification of the display unit 219 under the control of the control unit 201. In addition, the video processing unit 217 performs compression/decompression on the presentation data.

The display unit 219 displays the presentation data output from the video processing unit 217. In addition, the display unit 219 presents execution status images associated with the applications for providing the DMB service, the playlist having program items obtained from EPG information, and the replaying programs under the control of the control unit 201.

The multimedia module 221 recognizes the type of DMB service requested by the user and provides the DMB service corresponding to the user requested DMB service type such as a video, audio, and data.

The multimedia processing module 221 also provides the automatic channel switching and automatic on/off functions operating on the basis of the settings associated with the program items of the playlist. The multimedia module 221 provides the user input data and application data associated with the DMB service to the video processing unit 219 and the audio processing unit 207, simultaneously.

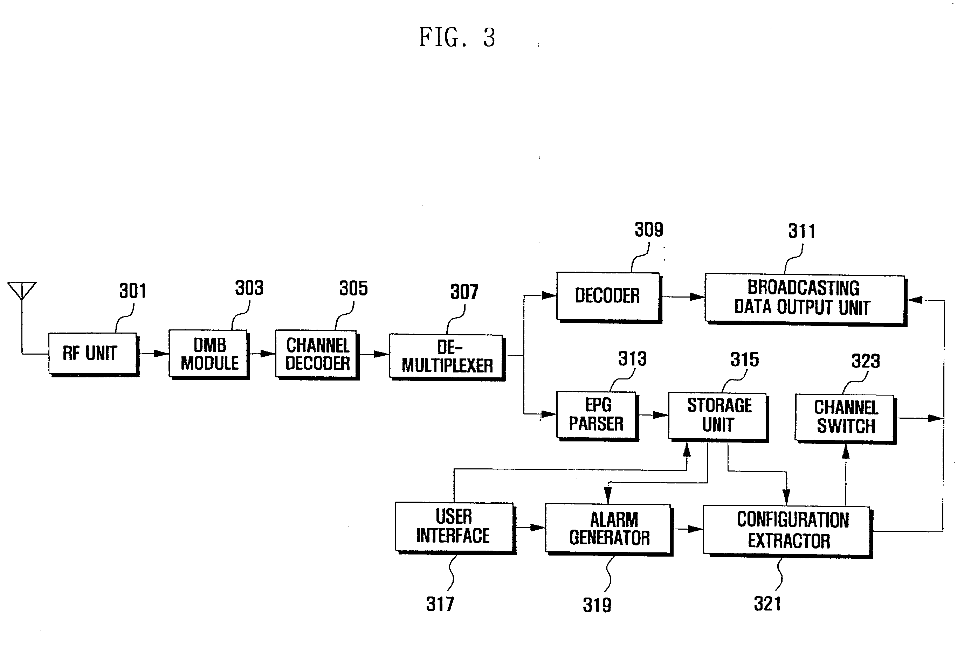

FIG. 3 is a block diagram illustrating a multimedia processing module of FIG. 2 in more detail.

In this embodiment, while the DMB receiver is combined with a portable terminal, the present invention is not limited to the portable terminal combined with the DMB receiver, and the DMB receiver can be combined with other electronic devices having a display. Of course, the DMB receiver can be implemented only for receiving the DMB signals.

In case of a dedicated DMB receiver, a connection interface can be provided for connecting the DMB receiver to other devices such as the portable terminal. Also, the DMB receiver can have the input part and the output part as in the portable terminal combined with the DMB receiver.

Referring to FIG. 3, the DMB receiver (300)includes an RF unit 301, a DMB module 303, a channel decoder 305, a demultiplexer 307, a decoder 309, a broadcasting data output unit 311, an EPG parser 313, a storage unit 315, a user interface 317, an alarm generator 319, a configuration extractor 321, and a channel switch 323.

The RF unit 301 receives broadcasting signals, i.e., the DMB signals transmitted from a satellite DMB or terrestrial DMB center through an antenna. The DMB signals are multiplexed and transmitted whereby the RF unit 301 converts the DMB signals into baseband signals. The DMB signal includes at least one of video, audio, text, and other data signals provided by a plurality of contents providers.

The DMB module 303 performs demodulation on the baseband signals processed by the RF unit 301 so as to output transmission packets and extracts the DMB signals of the channel requested by the user.

The channel decoder 305 checks the transmission packets demodulated by the DMB module 303 and decodes an audio or video broadcasting program from the transmission packet. The demultiplexer 307 demultiplexes the decoded program. The transmission packet can contain channel information, i.e., the EPG information. In case of the EPG information, the channel decoder 305 can transmit the transmission packets to the demultiplexer 307 with differentiating information packets such as EPG data from program packets such as multimedia data.

The demultiplexer 307 de-multiplexes the transmission packets from the channel decoder 305 into the broadcasting program packets and information packets such that the broadcasting program packets are output to the decoder 309 and the information packets are output to the EPG parser 313. The channel decoder 305 and decoder 309(data decoder) are located in different places and having different functions. The function of the decoder 309 (data decoder) is described in the following paragraph.

The decoder 309 receives the broadcasting program packets output from the demultiplexer 307 and decodes the broadcasting program packets. The decoded broadcasting packets are output to the broadcasting data output unit 311.

The broadcasting data output unit 311 outputs the broadcasting programs, e.g., the audio and video programs decoded by the decoder 309 through a predetermined output unit of the DMB receiver.

The EPG parser 313 receives the information packets demultiplexed by the demultiplexer 307 and extracts the broadcasting information, i.e., the EPG information The EPG Parser 313 outputs the EPG information to the storage unit 315.

The storage unit 315 stores the broadcasting program information generated at the EPG parser 313 and checks that there is a key input for presenting the playlist through the user interface. If a key input for presenting the playlist is detected, the playlist is generated on the basis of the broadcasting program information stored in the storage unit 315. In addition, the storage unit 315 stores the playlist created and edited by the user and information on the program items and settings of the program items.

The user interface 317 extracts basic information on the broadcasting program selected by the user from the EPG information and configures the playlist by mapping the extracted information to the broadcasting program. That is, the user interface 317 allows mapping the broadcasting programs selected by the user to the channels and start and end times of the broadcasting programs of the channels creating the playlist consisting of the broadcasting programs.

The alarm generator 319 checks the configurations of the playlist set through the user interface 317 and generates alarms when the start and end times of the broadcasting programs in a user preference time period come close. In addition, the alarm generator 319 automatically generates on/off alarms of the broadcasting programs using a timer and alarm function.

The configuration extractor 321 extracts the broadcasting programs scheduled in a time period on the playlist with the alarm generated by the alarm generator 319 and automatically starts and ends the extracted broadcasting program. The configuration extractor 321 also extracts the channel information on the broadcasting program while the broadcasting program plays back.

The channel switch 323 performs switching to the channel through which the program is broadcasted under the control of the configuration extractor 321. In FIG. 3, the channel switch 323 is separately implemented enabling clear explanation, however, the function of the channel switch 323 can be incorporated into the configuration extractor 321.

Now, the operation of the above structured DMB receiver will be described with reference to the accompanying drawings.

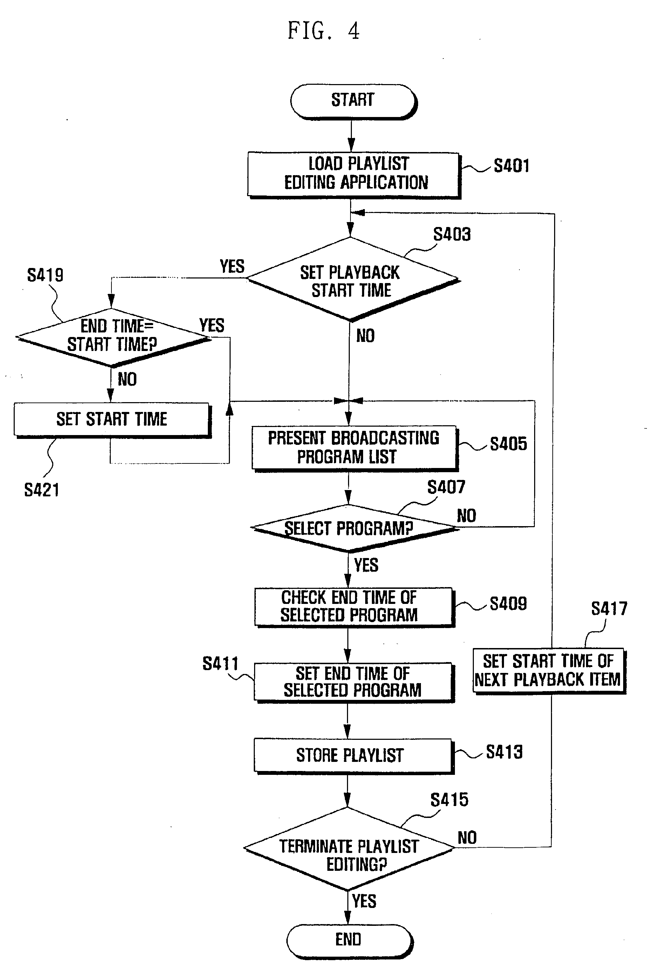

FIG. 4 is a flowchart illustrating a method for receiving multimedia broadcasting programs according to the present invention.

Referring to FIG. 4, once a user command for loading a playlist editing application is input by a user, the playlist editing application is loaded at step S401. After the playlist editing application is loaded, the DMB receiver determines whether a key input for setting a playback start time at step S403. If there is no key input for setting a playback start time within a predetermined period, the DMB receiver checks current time and presents a broadcasting program list for the current time period at step S405. The broadcasting program list is extracted from EPG information transmitted by a broadcasting center.

After displaying the broadcasting program list, the DMB receiver determines whether a key input for selecting a program from the broadcasting program list is detected at step S407.

If a program is selected, the DMB receiver checks an end time of the selected program at step S409 and sets end time of the selected program at step S411. The end time of the selected program can be edited. That is, if a key input for setting the end time of the program at step S411 is detected, the DMB receiver allows the user to edit the end time of the program, otherwise, the end time obtained from the EPG information remains.

After the end time of the program is set, the DMB receiver edits and stores a playlist in which the selected program is arranged as a playback item with the information on the channel, start time, and end time of the playback item at step S413.

After storing the playlist, the DMB receiver determines whether a key input for terminating a playlist editing application is detected within a predetermined period at step S415. If a key input for terminating a playlist editing application is detected, the DMB receiver ends the playlist editing procedure. Otherwise, the DMB receiver sets the end time of the playback item as a start time of a next playback item at step S417 and repeats step S403.

In the meantime, if a key input for setting a playback start time is detected at step S403, the DMB receiver determines if a start time set by an end time of a previous playback item arranged in the playlist exists at step S419.

If a start time exists, the DMB receiver performs step S405 with the existing start time. Otherwise, the DMB receiver allows the user to set the start time at step S421 and performs step S405 with the start time set by the user.

Now, the playlist generation procedure of a DMB receiver according to an embodiment of the present invention is described in more detail.

Typically, a portable phone receives EPG data and stores the EPG data in a database. From the EPG data, a user can obtain basic information on a channel and start and end times of each of program items represented by the EPG data. In addition, the EPG data is provided for creating a playlist, which can be edited by the user.

If a playlist editing application is requested to be loaded, the DMB receiver activates the playlist editing application and waits an input for setting a start time of the playlist.

If an input for setting the playlist start time is detected, the DMB receiver determines the playlist start time and presents program items scheduled to be broadcasted after the playlist start time. Accordingly, the user can select at least one of the program items and creates a playlist by arranging the selected program item.

If a program item is selected by the user, the DMB receiver checks the start time and an end time of the selected program item by referring to the EPG data.

An end time of the selected program item is set with the end time of the selected program item by referring to the EPG data.

A playback end time of the selected program item can be set equal to the program end time of the selected program item or set to a time input by the user. Also, the playback end time of the broadcasting program can be set to a time to elapse from the playback start time (for example, after 30 seconds and after 1 hour) or can be set to an absolute time (for example, 4:30 PM).

After the channel and playback start and end times are set, the program item is registered on the playlist together with the channel through which the program item is broadcasted, title of the program item, and playback start and end times of the program item.

Once the program item is registered on the playlist, the playback end time of the registered program item is automatically set as a playback start time of a next program item to be registered. The playback start time of the next program to be registered can be adjusted according to the user's request.

If the playback start time for the next program item is changed, there exists a time interval between two sequentially registered program items. In this case, playback stop of the former program item and a playback start of a latter program item are automatically performed. In addition, if the two sequentially registered program items are broadcasted through different channels, channel switching is automatically performed.

After the playback start time for the next program item to be registered, the DMB receiver presents the program items to be broadcasted on or after the playback start time for the next program item, referring to the EPG data.

In this manner, multiple program items can be arranged and edited in the playlist. The playlist can be implemented with timer and alarm functions for automatically starting and ending playbacks of the program items and switching channels.

Of course, the playlist-based program reception of the present invention can be implemented with audio broadcasting system. Further, the playlist can be formed with the audio program items as well as the video program items.

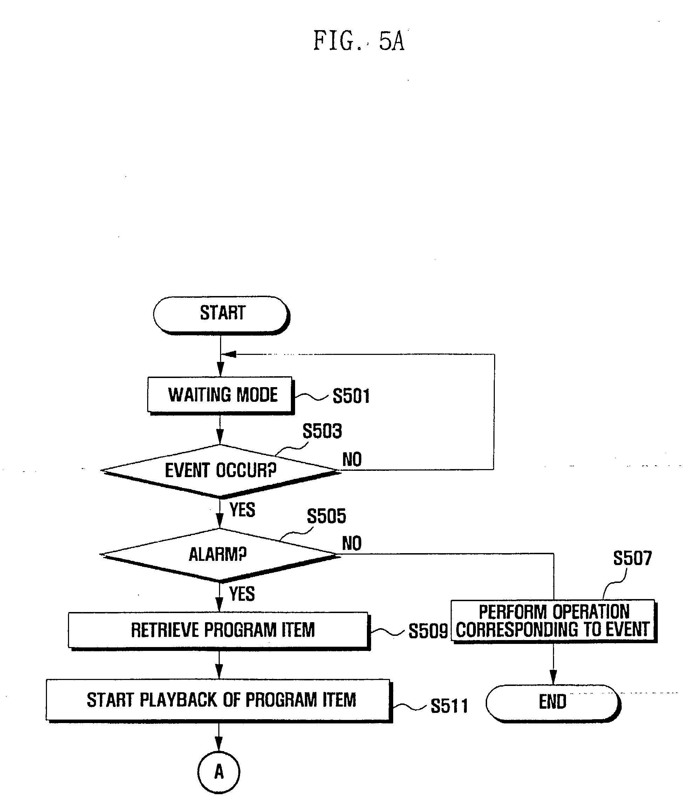

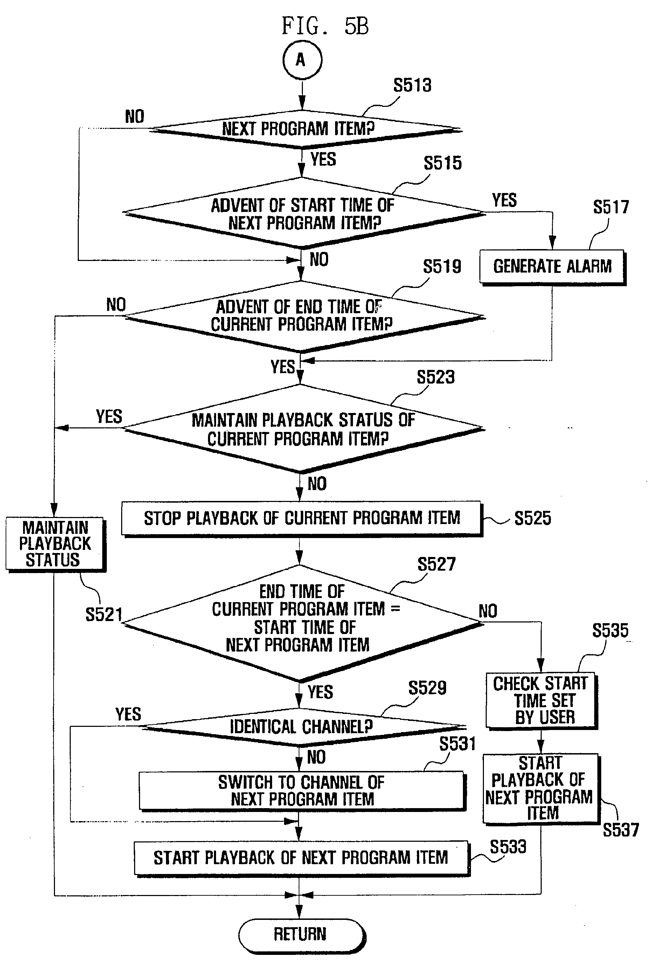

FIGs. 5A and 5B are flowcharts illustrating a procedure for playback of program items registered in a playlist according to the present invention.

Referring to FIGs. 5A and 5B, while in a waiting mode at step S501, the DMB receiver determines whether an event occurs (S503) The DMB application includes an information provider program module for providing audio and video information, channel information, and broadcasting data; a mode switching program module for switching to a playlist configuration mode; an information extraction program module for extracting information on channels and start and end times of the program items of the playlist from EPG information in the playlist configuration mode; a storage control program module for storing the playlist; an alert generation module for checking the start and end time of each program item of the playlist and alerting arrival of the start and end times; an on/off control module for turning on and off the power in accordance with playlist settings; a channel shifting program module for automatically changing channels according to information of the program items when the programs are provided through different channels; and a playback control program module for controlling the playback of each broadcasting program.

If the event occurs, the DMB receiver determines whether the occurred event is an alarm set in a playlist at step S505. If the event is not an alarm set in the playlist, the DMB receiver performs an operation corresponding to the event at step S507.

If the event is an alarm set in the playlist, the DMB receiver checks program items in the playlist and retrieves the program item which caused the alarm at step S509.

After retrieving the program item which caused the alarm, the DMB receiver checks a channel through which the program item is broadcasted and start and end times and then starts playback of the program item on the start time at step S511. While playing the program item, the DMB receiver determines if another program item is arranged after the current program item at step S513.

If another program item arranged after the current program item exists, the DMB receiver checks information on the next program item and determines if the start time of the next program item is in an alerting time range at step S515.

If the start time of the next program item is in an alerting time range, the DMB receiver generates an alarm for notifying the arrival of the start time of the next program at step S517 and determines whether to maintain the playback of the current program item at step S523.

If the start time of the next program item is much later, the DMB receiver determines whether there is an advent of the end time of the current program item at step S519. If the end time of the current program item is later, the DMB receiver maintains playback status of the current program item at step S521.

At step S519, if the end time of the first program item is within an alerting time range, the DMB receiver determines whether to maintain playback of the current program item at step S523.

If at step S523 it is determined that the playback of the current program item is to be maintained, the DMB receiver maintains the playback of the current program item at step S521.

If at step S523 it is determined to stop the playback of the current program item, the DMB receiver stops the playback of the current program item at step S525 and determines whether the end time of the current program item is identical with the start time of the next program item at step S527.

If the end time of the current program item is identical with the start time of the next program item, the DMB receiver checks the channels of the current program item and the next program item and determines if the channel of the next program item is identical with the channel of the current program item at step S529.

If the channel of the next program item is not identical with the channel of the current program item, the DMB receiver automatically switches from the current program item channel to the next program item channel at step S531 and then performs playback of the next program item at step S533.

If the channels of the current and next program items are identical with each other, the DMB receiver performs playback of the second program item in step S533 without switching channels.

If the end time of the current program item is not identical with the start time of the next program item at step S527, the DMB receiver checks a start time set by the user at step S535 and starts playback of the next program item on the start time set by the user at step S537.

In case there exists a time interval between current and next program items, the DMB receiver can be turned on and off in accordance with the end time of the current program item and the start time of the next program item.

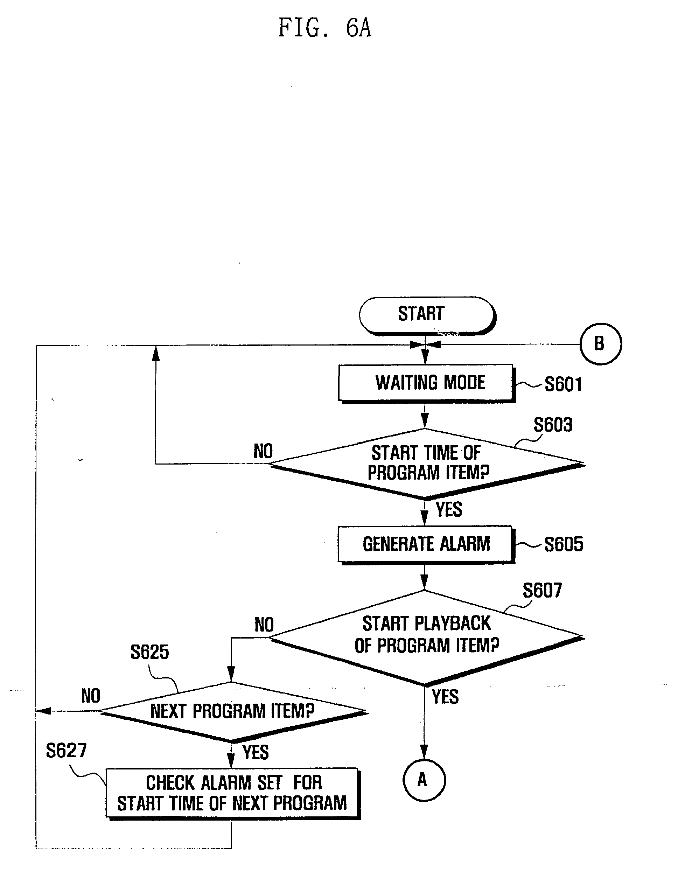

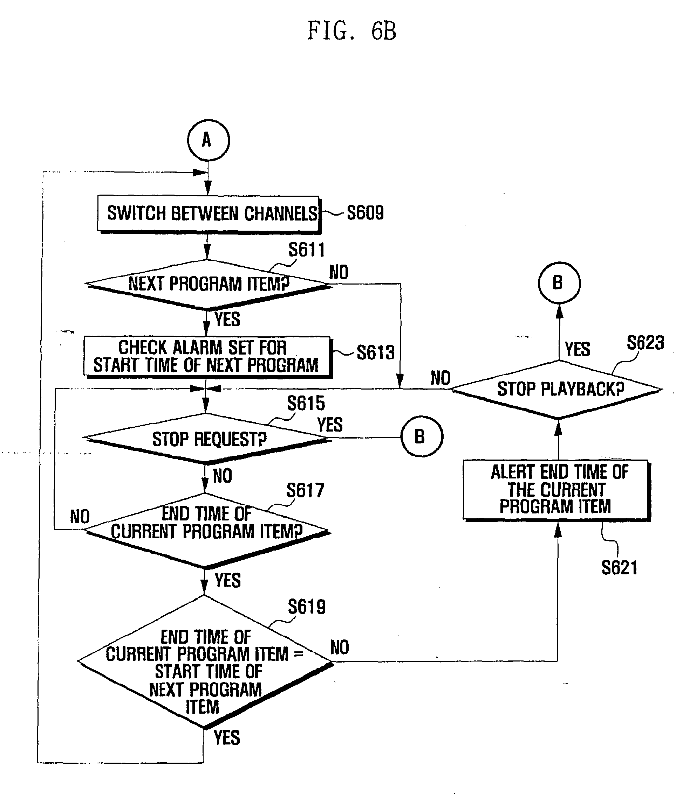

FIGs. 6A and 6B are flowcharts illustrating a procedure for playback of a program items registered in a playlist according to the present invention.

Referring to FIGs. 6A and 6B, while in a waiting mode at step S601, the DMB receiver determines if there is a program item whose start time is in an alerting time range at step S603.

If there is no program item whose start time is in an alerting time range, the DMB receiver stays in the waiting mode in step S601. If it is determined there is a program item of which start time is in an alerting time range, the DMB receiver generates an alarm for notifying the imminence of the start time of the program item at step S605.

After alarming the start time, the DMB receiver determines whether to allow starting playback of the program item on the start time at step S607. Here, the user decides whether to allow starting the playback of the program item. However, the DMB receiver can be configured such that the start time of the program item which is alarmed is automatically played back on the start time.

If it is determined that the program item is starting playback, the DMB receiver automatically switches the channels for receiving the program item and starts playback of the program item at step S609.

If the playback of the program item is not allowed by the user's key input at step S607, the DMB receiver determines whether a next program item is arranged after the current program item at step S625.

If a next program item exists, the DMB receiver enters the waiting mode at step S601. If no next program item exists, the DMB receiver checks an alarm set for a start time of the next program item at step S627 and then enters the waiting mode at step S601.

After switching channels and starting playback of the program item at step S609, the DMB receiver determines whether a next program item arranged after the current program item exists at step S611. If no next program item exists, the DMB receiver determines whether there is a user request for stopping the playback of the current program items at step S615. If a next program item exists, the DMB receiver checks an alarm set for notifying the start time of the next program item at step S613 and then determines whether there is a user request for stopping the playback of the current program item at step 5615.

If a user request for stopping the playback of the current program item is detected, the DMB receiver enters the waiting mode at step S601. If there is no user request for stopping the playback of the current item within a predetermined time, the DMB receiver determines whether the end time of the current program item is within an alerting time range at step 617.

If the end time of the current program is not in the alerting time range, the DMB receiver repeats the playback of the current program item at step S615. If the end time of the current program is in the alerting time range, the DMB receiver determines if the end time of the current program item is identical with the start time of the next program item at step S619.

If the end time of the current program item is identical with the start time of the next program item, the DMB receiver repeats step S609. If the end time of the current program item is not identical with the start time of the next program item, the DMB receiver alerts the end time of the current program item with a notification message, for example a popup message, allowing the user to decide to stop or maintain playback at step S621, and then determines whether a playback stop command initiated by the user at step S623.

If the playback stop command was initiated, the DMB receiver stops the playback of the current program item and then enters the waiting mode in step S601. If the playback stops command came within a predetermined time, the DMB receiver maintains the playback of the current program item and performs step S615.

The playback of the next program item can be automatically performed without comparison between the end time of the current program item and the start time of the next program item, in accordance with a user's configuration.

Now the playback procedure of program items arranged in the playlist edited by the user will be described in more detail.

The DMB receiver checks an alarm for alerting a start time of a program item, the alarm being set through the playlist editing application, and then notifies the advent of the start time of the program item for allowing the user to decide to start the playback of the program item.

The notification step for allowing the user to decide the playback of the program item can be omitted. In this case, the DMB receiver automatically starts the playback of the program item on the start time of the program item. The user can configure the playback options.

If a playback start command is initiated, the DMB receiver activates a DMB playback application, automatically tunes the channel through which the program item is broadcasted, and performs playback of the program item.

If the end time of the program item is within a predetermined range, the DMB receiver determines whether the end time of the current program item is identical with a start time of the next program item. If the end time of the current program item is identical with a start time of the next program item, the DMB receiver checks the channel of the two program items and automatically switch the channels if required.

Before the automatic channel switching, it is possible to alert the end time of the current program item so as to determine whether to maintain the playback of the current channel.

Preferably, the playback procedure based on the playlist ends, if it is determined to maintain the playback of the current channel.

If it is determined not to maintain the playback of the current channel, the DMB receiver automatically switches to the channel broadcasting the next program item upon the start time of the next program item.

If the end time of the current program item is not identical with the start time of the next program item, the DMB receiver alerts the advent of the end time of the current program item and/or the advent of the start time of the next program item such that the user decides to stop the playback of the current program item and start the playback of the next program item.

As described above, the device and method for receiving the digital multimedia broadcasting according to the present invention allow the user to create and edit a playlist, which contains at least one program item obtained from EPG data and information on the program items, and automates channel switching and playbacks of the program item, resulting in improved user convenience.

In addition, because the device and method for receiving the digital multimedia broadcasting according to the present invention can automatically switch channels and play the program items reserved in a playlist, it is possible to save time in searching program items broadcasted through a plurality of broadcasting channels and reduce the burden to remember the broadcasting times of the program items.

Although exemplary embodiments of the present invention have been described in detail hereinabove, it should be clearly understood by an artisan of ordinary skill in the art that many variations and/or modifications of the basic inventive concepts herein taught fall within the spirit and scope of the present invention, as further defined by the appended claims.

## Claims

1. A method for receiving a digital broadcast, comprising:
creating a playlist containing plural program items scheduled to be broadcasted through at least one broadcast channel, each program item having delimiters and program information;
monitoring an advent of one of the delimiters; and
performing an operation corresponding to the delimiter if the delimiters is detected,.

2. The method of claim 1, wherein the program information comprises a channel through which the program item is broadcasted, and the delimiters comprise playback start times and playback end times of the program items.

3. The method of claim 1, wherein the delimiters and the program information are obtained from an electronic program guide.

4. The method of claim 1, wherein performing an operation corresponding to the delimiter comprises:
determining whether the delimiter is a start time of a program item;
checking the channel of the program item from the program information; and
switching to the checked channel.

5. The method of claim 1, wherein performing an operation corresponding to the delimiter comprises:
determining whether the delimiter is an end time of a program item; and
stopping the playback of the program item if the delimiter is an end time of the program item.

6. The method of claim 5, wherein performing an operation corresponding to the delimiter further comprises:
alerting the end time of the program item; and
determining whether a command for confirming the end time of the program item was initiated.

7. The method of claim 1, further comprising:
determining whether a next program item arranged after the current program item exists.

8. The method of claim 1, further comprising:
checking a channel for the next program item, if the next program item exists,;
switching to that channel after the current program item ends.

9. The method of claim 2, further comprising:
determining whether a next program item arranged after the current program item exists;
checking an end time of the current program item and a start time of the next program item if a next program item arranged after the current program item exists;
determining whether the end time of the current program item is identical with the start time of the next program item; and
switching to the channel through which the next program item is broadcasted.

10. The method of claim 2, further comprising:
determining whether a next program item arranged after the current program item exists;
checking an end time of the current program item and a start time of the next program item if a next program item arranged after the current program item exists;
determining whether the end time of the current program item is identical with the start time of the next program item;
determining whether a command for stopping or maintaining the channel was initiated, if the end time of the current program item is not identical with the start time of the next program item;
waiting for the advent of the start time of the next program item; and
automatically switching to the channel broadcasting the next program item on the start time of the next program item.

11. A method for receiving a digital broadcast for a broadcasting receiver, comprising:
creating a playlist containing plural program items scheduled to be broadcasted through at least one of the receiver's broadcast channel, each program item having start, end times and program information;
determining if there is an advent of a start time of a program item;
start playback of the program item on the start time;
determining there is an advent of an end time of the program item;
determining there is an advent of a start time of a next program item;
determining whether the end time of the current program item is identical with the start time of the next program item;
switching to a channel broadcasting the next program item on the start time of the next program if the end time of the current program item is identical with the start time of the next program item; and
performing a preset operation before the start time of the next program item if the end time of the current program item is not identical with the start time of the next program item.

12. The method of claim 11, further comprising:
generating an alarm for notifying the advent of the start time of a program item; and
checking the information of the program item if the alarm is generated.

13. The method of claim 11, further comprising:
determining whether there is an input to maintain or stop the channel if there is an advent of the end time of the current program;
maintaining the channel if there is an input for maintaining the channel; and
stopping receiving the channel if there is an input for stopping the channel.

14. The method of claim 11, further comprising:
checking channels of the current and next program items if the end time of the current program item is identical with the start time of the next program item;
starting playback of the next program item after switching to the channel of the next program item if the channels of the current and next program items are not identical; and
starting playback of the next program item if the channels of the current and next program items are identical.

15. The method of claim 11, further comprising:
determining whether a next program item arranged after the current program item exists;
extracting program information on the next program item if the next program item exists;
checking an advent of a start time of the next program item;
generating an alarm for notifying the advent of the start time of the next program;
checking an advent of the end time of the current program item, if the start time of the next program is at a later time.

16. The method of claim 11, further comprising:
notifying the advent of the end time of the current program; and
determining whether there is an input for maintaining or stopping the playback of the current program item.

17. The method of claim 11, wherein performing the preset operation comprises:
turning off the broadcasting receiver on the end time of the current program item;
turning on the broadcasting receiver on the start time of the next program item; and
changing to the channel through which the next program item is broadcasted.

18. A method for receiving a digital multimedia broadcast for a receiver, comprising:
creating a playlist containing plural program items scheduled to be broadcasted through at least one of the receiver's broadcast channel, each program item having start and end times and program information;
playing a first program item arrange in the playlist after automatically turning the broadcasting receiver to a channel of the first program item on a start time of the program item;
checking the start time of a second program item arranged right after the first program item;
determining whether an end time of the first program item is identical with the start time of the second program item; and
switching, automatically, to a channel of the second program item if the end time of the first program item is identical with the start time of the second program item.

19. The method of claim 18, further comprising:
determining if the end time of the current program item is not identical with the start time of the next program item; and
executing the user's command to either maintain or stop the playback of the first program .

20. The method of claim 18, further comprising:
stopping the playback of the first program item according to the start time of the second program item; and
starting a playback of the second program item.

21. A method for receiving a digital multimedia broadcast for receiver having a playlist, comprising:
determining if there is an input for editing a start time of the playlist;
presenting program items currently scheduled;
obtaining an end time of the first program item if a program item is selected to be first;
editing the end time of the first program item according to the input if an input for editing the end time is detected, t; and
setting the edited time as the end time of the first program item.

22. The method of claim 21, further comprising:
obtaining current time if there is no input for editing the start time of the playlist; and
obtaining the program items in the period defined by the current time are extracted from an electronic program guide (EPG) data.

23. The method of claim 21, wherein the end time of the first program item is obtained from the electronic program guide (EPG).

24. The method of claim 21, wherein editing the end time of the first program item comprises:
obtaining the end time of the first program item from an electronic program guide if no input for editing the end time of the first program item exists.

25. The method of claim 21, wherein each program item comprises information of a start time, end time, and channel of the program item.

26. The method of claim 21, further comprising:
setting the end time of the first program item as a start time of a second program item to be arranged after the first program item.

27. The method of claim 21, further comprising:
setting a start time of a second program item on the basis of a user input.

28. The method of claim 27, further comprising:
determining if there is a time interval between the end time of the first program item and the start time of the second program item;
setting the first program item to be automatically ended or maintained if there is a time interval between the end time of the first program item and the start time of the second program item; and
setting an automatic channel switching and automatic on and off of the broadcasting receiver on the basis of the information of the first and second program items.

29. The method of claim 27, further comprising:
determining if there is a time interval between the end time of the first program item and the start time of the second program item; and
executing one of the options of automatically turning-off the broadcasting receiver on the end time of the first program item, or automatically turning-on the broadcasting receiver on the start time of the second program item, or automatically switching between the channels of the first and second program items, and maintenance of the channel.

30. The method of claim 21, wherein the end time of the first program item is contextually set.

31. The method of claim 21, wherein the playlist comprises information for automatically switching channels, starting and stopping the playbacks of the program items.

32. A portable device for receiving digital multimedia broadcast (DMB), comprising:
a memory for storing an DMB application, operational data , and configuration parameters;
a controller for creating a playlist, and for controlling the DMB receiver and processing playbacks of the program items on the basis of the playlist;
a display unit for presenting the playlist and programs; and
a multimedia module for automatically switching channels.

33. The portable device of claim 31, wherein the DMB application comprising:
an information extraction program module for extracting information on broadcast data from EPG information;
a storage control program module for storing the playlist created on the basis of the information extracted from the broadcast data;
an alarm generation module for generating alarms on the basis of the basic information;
an on/off control module for turning on and off the power in accordance with playlist settings;
a channel shifting program module for automatically changing channels according to information of the program items when the programs are provided through different channels;
and a playback control program module for controlling the playback of each broadcasting program
for controlling the playback of each broadcasting program.

34. The portable device of claim 33, wherein the program information comprises a channel indicator, and a start and end times of the program item.

35. The portable device of claim 32, wherein the multimedia module comprises:
a parser for receiving information packets to generate electric program guide information (EPG) from the information packets;
a user configuration unit for extracting program items and basic information on the program items, and arranging the program items with the basic information in the playlist;
an alarm generator for generating alarms on the basis of the basic information; and
a configuration extractor for retrieving program item and performing automatic channel switching and automatic power on/off function on the basis of the basic information.

36. The portable device of claim 35, wherein the multimedia module further comprises a channel switch which performs switching to a broadcasting channel.

37. The portable device of claim 35, wherein the multimedia module further comprises a storage for storing information on the channels and start and end times of the program items, program items, and configuration parameters associated with the program items.

38. The portable device of claim 35, wherein the user configuration unit configures the channels and start and end times of the program items arranged in the playlist.

39. The portable device of claim 35, wherein the alarm generator generates alarms for indicating automatic on/off of multimedia module.

40. A digital multimedia broadcasting (DMB) receiver comprising:
an electronic program guide (EPG) parser for extracting EPG data from broadcasted signals;
storage for storing the EPG data extracted by the EPG parser, and a playlist created on the basis of the EPG data;
a user configuration unit for extracting program items and basic information on the program items, and arranging the program items with the basic information in the playlist;
an alarm generator for generating alarms on the basis of the basic information; and
a configuration extractor for retrieving program item and performing automatic channel switching and automatic power on/off function on the basis of the basic information.

41. The DMB receiver of claim 40, further comprising a channel switch for automatically switching channels under the control of the configuration extractor.

42. The DMB receiver of claim 40, further comprising:
a channel decoder for decoding incoming packets and checking whether the decoded packets contains multimedia data or EPG data; and
a de-multiplexer for de-multiplexing at least one of the multimedia data and EPG data,
wherein the multimedia data are forwarded to the de-multiplexer; and the EPG data are forwarded to the de-multiplexer with differentiating the EPG data from the multimedia data.

43. The DMB receiver of claim40, wherein the user configuration unit configures the channels and start and end times of the program items arranged in the playlist.

44. The DMB receiver of claim 40, wherein the alarm generator generates alarms for indicating automatic on/off of the DMB receiver.
